# EUROPEAN PATENT APPLICATION

(11) **EP 2 535 699 A1**
(43) Date of publication of application: **19.12.2012**
(21) Application number: 12171769.8
(22) Date of filing: 13.06.2012
(51) Int. Cl.: G01N 21/41

(54) **Fluid sensor**

(30) Priority: 13.06.2011 JP 2011131348; 11.06.2012 US 201213493492
(71) Applicant: Azbil Corporation, Chiyoda-ku Tokyo 100-6419 (JP)
(72) Inventor: Akimoto, Ryu, Tokyo 100-6419 (JP); Kobashi, Takashi, Tokyo 100-6419 (JP); Koike, Tetsuo, Tokyo 100-6419 (JP); Tanaka, Minoru, Tokyo 100-6419 (JP)
(74) Representative: Domenego, Bertrand

(57) **Abstract**

A slit (31) for selectively allowing the transmission of emitted light from a light-emitting portion (10) that has been diffracted through passing through a pipe (P) wherein there is no fluid is provided between the pipe (P) and a slit (24) of a detecting portion (20). The emitted light from the light-emitting portion (10), which is diffracted by passing through the pipe (P) wherein there is a fluid, is blocked by the plate member wherein the slit (31) is formed, so as to not arrive at the detecting portion (20).

## Description

The present invention relates to a fluid sensor for detecting whether or not there is a fluid within a pipe, whether or not there is a bubble, and so forth.

Background Conventional fluid sensors have been installed on transparent pipes within a light path of a light-emitting element and a detecting element that are provided facing each other, where the difference in the index of refraction for the transmitted light between when there is a fluid within the pipe and when there is not a fluid within the pipe has been used to detect optically whether or not there is fluid within a pipe (See, for example, Japanese Unexamined Patent Application Publication H10-253425).

Because the conventional fluid sensor is structured as described above, when used to perform detection for a pipe that is narrower than envisioned at the time of the sensor design, the amount of light that is emitted into the pipe is excessively large, and thus there has been a problem in that it has not been possible to pickup adequately the change in the received flux between when there is a fluid and when there is no fluid, making it difficult to detect whether or not there is fluid. In order to solve this problem one may consider making the sensor itself smaller so as to match the diameter of the pipe; however, there are limits in terms of manufacturing technology on the degree of miniaturization, and the need to prepare different sensors for different sizes of pipes is inconvenient.

Moreover, when used to perform detection on an extremely narrow pipe, such as, less than 1/16 inches, a slit that is narrower than the diameter of the pipe has been provided conventionally in the light path from the light-emitting element toward the pipe, but with this structure, when the pipe diameter has changed the light that has been diffracted by the pipe does not necessarily arrive at the detecting element, but rather there has been a problem in that it has been difficult to detect whether or not there is a fluid.

The present invention was created in order to solve problems such as set forth above, and the object thereof is to provide a fluid sensor able to detect whether or not there are fluids in extremely small-diameter pipes of different internal diameters.

### Summary

The fluid sensor according to an example the present invention includes a light-emitting portion for emitting emitted light from a light-emitting element through a first slit toward a transparent pipe; a detecting portion for detecting, by a detecting element, the emitted light, emitted toward the pipe from the light-emitting portion, through a second slit; and a third slit, for selectively passing, toward the second slit, the emitted light that is emitted toward the pipe by the light-emitting portion when there is no fluid within the pipe.

In a fluid sensor according to a another example the present invention, the third slit is shaped as an opening that is smaller than the radius of the pipe, where the opening edge portion is positioned aligned with the axis of the pipe.

The fluid sensor according to a further example of the present invention has a positioning portion for positioning the pipe so that the axis of the pipe follows the opening edge portion of the third slit.

A fluid sensor according to a yet further example is provided with a transparent holding portion for holding the pipe against the third slit, provided between the first slit and the third slit.

A fluid sensor according to an example is provided with a housing that is equipped with a first slit and a second slit in the wall surfaces of a pair of protruding structures that face each other with a hollow portion therebetween, for containing the respective light-emitting element and detecting element, that has a pair of protruding structures with the hollow portion interposed therebetween, and an attachment that is attachable to the hollow portion in the housing, and a third slit is provided in the attachment.

The examples of the present invention provide a third slit between the pipe and the second slit on the detecting portion side, making it possible to detect whether or not there is a fluid, even for an pipes with extremely narrow parameters, with different outer diameters.

Other examples according to the present invention are provided with an attachment, wherein a third slit is formed, provided separately from the housing, thus making it possible to detect whether or not there is fluid in a large diameter pipe, in a state wherein there is no attachment, or whether or not there is fluid in an extremely small-diameter pipe, in a state wherein the attachment is attached, while having the housing main unit-side in common.

### Brief Description of the Drawings

FIG. 1 is an external perspective diagram illustrating the structure of a fluid sensor according to an example according to the present invention, showing the state wherein a pipe is attached.
FIG. 2 is an external perspective diagram illustrating the structure of a fluid sensor according to an example, showing the state wherein a pipe is not attached.
FIG. 3 illustrates the primary components of the fluid sensor according to the example, wherein FIG. 3 (a) is a cross-sectional diagram cut along the line AA in FIG. 1, and FIG. 3 (b) is a plan view.
FIG. 4 is a diagram for explaining the method for detection in the fluid sensor according to the example, wherein FIG. 4 (a) illustrates the emitted light in the state wherein there is no fluid within a pipe having an inner diameter of 0.50 mm, and FIG. 4 (b) shows the emitted light when there is fluid.
FIG. 5 is a diagram for explaining the method for detection in the fluid sensor according to the example, wherein FIG. 5 (a) illustrates the emitted light in the state wherein there is no fluid within a pipe having an inner diameter of 0.75mm, and FIG. 5 (b) shows the emitted light when there is fluid.
FIG. 6 is a diagram for explaining the method for detection in the fluid sensor according to another example, wherein FIG. 6 (a) illustrates the emitted light in the state wherein there is no fluid within a pipe having an inner diameter of 1.00mm, and FIG. 6 (b) shows the emitted light when there is fluid.
FIG. 7 is a cross-sectional diagram illustrating a further example of a fluid sensor.

### Detailed Description

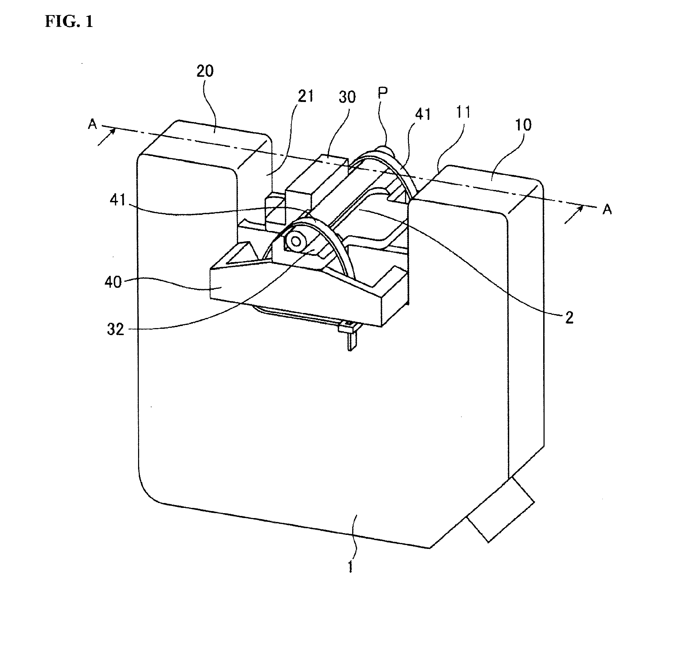

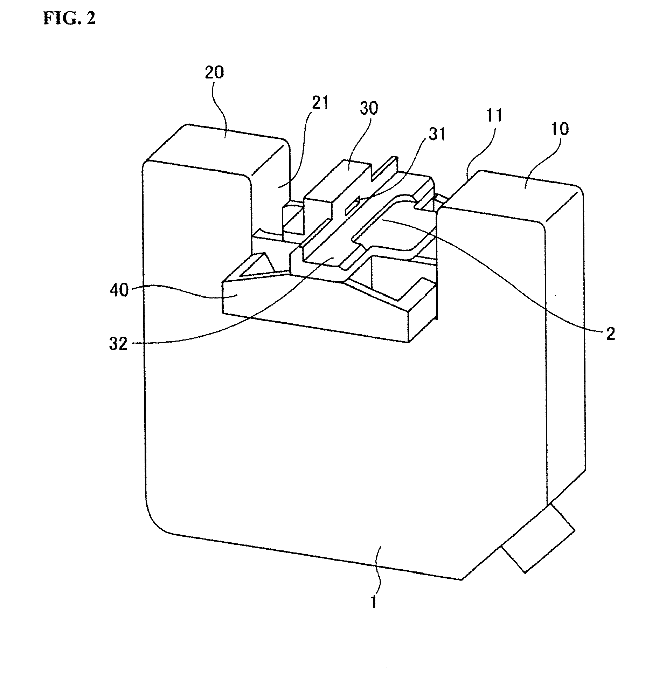

The fluid sensor illustrated in FIG. 1 and FIG. 2 has hollow portion in one edge of a housing 1, where this hollow portion is a detection region 2, where one protruding structure of a pair on either side of the detection region 2 is a light-emitting portion 10, and the other protruding structure is a detecting portion 20. Moreover, a holding portion 40 for securing integrally an extremely narrow-diameter pipe P, which is subject to detection, together with the attachment 30 is formed on a side wall face of the housing 1. In the illustrated example, a band 41 that passes through two holes that are provided in the holding portion 40 is wrapped onto the attachment 30 for each pipe P, in order to secure the attachment 30 and pipe P to the housing 1. Note that the fluid sensor in a state wherein there is no attachment 30 is designed optimally for detecting whether or not there is a fluid, for a pipe (not shown) of an external diameter that is larger than that of the pipe P illustrated in FIG. 1.

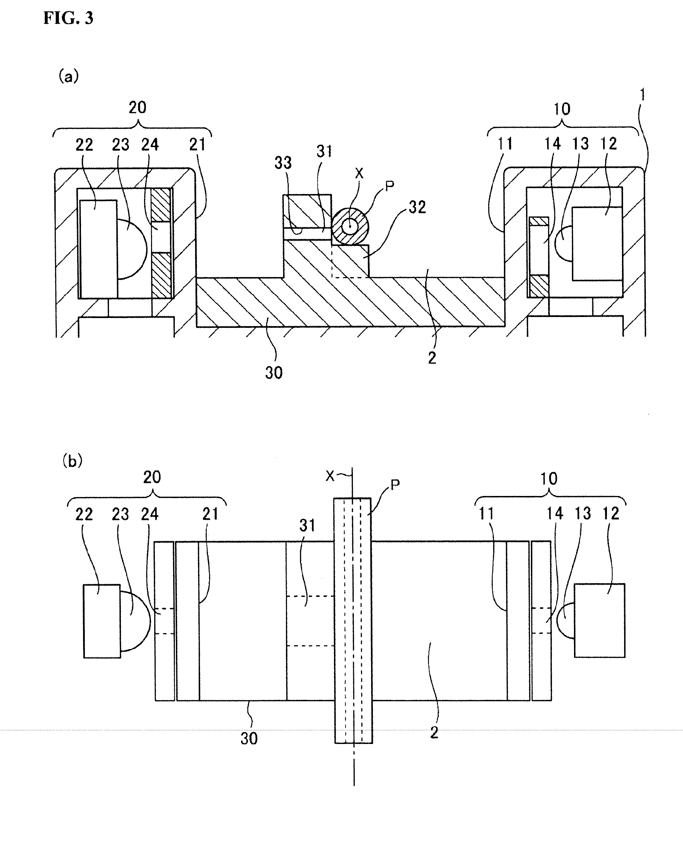

FIG. 3 (a) shows a cross-sectional diagram of a fluid sensor, cut along the line AA shown in FIG. 1, and FIG. 3 (b) shows a plan view. Note that in FIG. 3 (b) the drawing of the main unit part of the housing 1 is omitted. As illustrated in FIG. 1 through FIG. 3, housing wall faces 11 and 21, which face the detection region 2 of the housing 1, are transparent members. Moreover, the light-emitting element 12 that emits light toward the detection region 2, the lens 13, and the slit (the first slit) 14 are contained within the inside of the light-emitting portion 10. On the other hand, a detecting element 22 for detecting the light from the direction of the detection region 2, the lens 23, and the slit (the second slit) 24 are contained within the first detecting portion 20. The part that is between the housing wall faces 11 and 12 is the detection region 2, where the attachment is attached, and the extremely narrow pipe P is disposed therein.

Note that the light-emitting portion 10 is structured with the lens 13 attached to the light-emitting element 12, which is an LED (a light-emitting diode), or the like, and disposed in front of the slit 14; however, there is no limitation thereto, and, instead, an optical fiber may be bonded to the slit 14 and light from the light-emitting element 12 may be conveyed to the slit 14 through the optical fiber. Moreover, the detecting portion 20 is structured with the lens 23 attached to a detecting element 22, such as a photodiode, or the like, and disposed in front of the slit 24; however, there is no limitation thereto, but instead, as with the light-emitting portion 10, an optical fiber may be bonded to the slit 24, and the light emitted through the slit 24 may be conveyed to the detecting element 22 through the optical fiber. Moreover, there need not necessarily be housing wall faces 11 and 21.

In the attachment 30, not only is a slit (the third slit) 31 formed in the plate member that is provided standing so as to block the emitted light that has passed through the detection region 2, but also a positioning portion 32 is formed so as to position the pipe P relative to the slit 31. This slit 31 is positioned between the pipe P and the slit 24, and the emitted light from the light-emitting portion 10 passes through the pipe P and goes into the slit 31. Note that while, in the present example, the plate member wherein the slit 31 is formed is in a state wherein it is in contact with the pipe P, it need not necessarily be in contact, but rather there may be some gap therebetween.

Pipe P is a transparent pipe, positioned in the positioning portion 32 so that the axis X of the pipe P is at the same height as the top side opening edge portion 33. Note that in the illustrated example, the outer diameter of the pipe is 1/16 inches (1.59 mm), and the width of the slit 31 in the vertical direction is 0.5 mm. While there are no particular constraints thereto in terms of the relationships between the sizes, the slit 31 has a shape wherein the opening is small so as to be no more than the radius of the pipe, where preferably the structure is such that the pipe P covers the slit 31 in a state wherein the axis X of the pipe P is aligned with the opening edge portion 33. If the opening portion of the slit 31 is covered by the pipe P, then the light that is emitted from the light-emitting portion 10 does not enter directly into the slit 31. Because of this, the light that is emitted from the light emitting portion 10 enters into the slit 31 after passing through the pipe P and diffracting. When passing through a pipe P without the fluid, only the emitted light that has diffracted passes selectively through the slit 31 to advance toward the detecting portion 20, where, on the other hand, when passing through a pipe P wherein there is the fluid, the light that is diffracted and emitted is blocked by the plate member of the attachment 30, so does not arrive at the detecting portion 20. Consequently, it becomes possible to detect whether or not there is a fluid within the extremely narrow pipe P, or whether or not there is an air bubble, based on the amount of light that is received by the detecting portion 20.

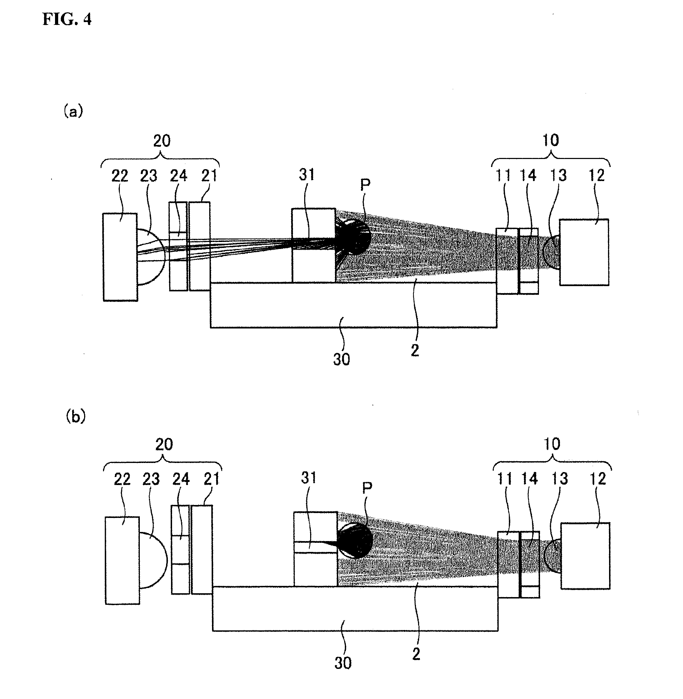

FIG. 4 is a diagram illustrating the emitted light when a pipe P that has an outer diameter of 1.59 mm and an inner diameter of 0.50 mm is used, where FIG. 4 (a) shows the case wherein there is no fluid in the pipe P, and FIG. 4 (b) shows the case wherein the fluid is present. Note that in FIG. 4 through FIG. 6 it is water that is envisioned as the fluid, and in the case wherein there is no fluid, the pipe P is filled with air.

The axis X of the pipe P is positioned, by the positioning portion 32, not shown, so as to be at the same height as the opening edge portion 33 of the slit 31. In FIG. 4 (a), the emitted light, emitted from the light-emitting element 12, that traverses the lens 13 and the slit 14 and that passes through the housing wall face 11 to enter into the detection region 2 (indicated by the lightest gray in FIG. 4 (a)) when there is no water within the pipe P is diffracted at a specific index of refraction by the outer peripheral face of the pipe P (indicated by the moderately dark gray in FIG. 4 (a)), and then is diffracted at a specific index of refraction by the inner peripheral face (indicated by the darkest gray in FIG. 4 (a)), so that a portion of the emitted light passes through the slit 31. The emitted light that has passed through the slit 31 passes through the housing wall face 21 and also passes through the slit 24, to be focused by the lens 23 to arrive at the detecting element 22. The light that has been received by the detecting element 22 is converted into an electric signal by a signal processing portion, not shown, and is compared to a threshold value that has been set in advance to evaluate whether or not there is a fluid. Specifically, if the value of the electric signal that indicates the amount of light received is in excess of the threshold value, then the evaluation is that light that was emitted from the light-emitting portion 10 has passed through the pipe P to arrive at the detecting portion 20, so a signal that indicates that there is no fluid within the pipe P is outputted.

On the other hand, in FIG. 4 (b), if there is water within the pipe P, then, when compared to the case wherein there is no water within the pipe P, the index of refraction within the pipe P is larger, and thus the emitted light that is emitted to the detection region 2 from the light-emitting portion 10 (indicated by the lightest gray in FIG. 4 (b)) is, for the most part, diffracted by the outer peripheral face of the pipe P (indicated by the moderately dark gray in FIG. 4 (b)), and advances, with essentially no diffraction, at the interface between the inner peripheral face and the water (indicated by the darkest gray in FIG. 4 (b)). Because of this, the emitted light is blocked by the plate member of the attachment 30, so as to not pass through the slit 31. Consequently, even if light that is external noise gets into the detecting portion 20, the amount of light that gets in is not adequate to exceed the threshold value. In this case, the signal processing portion, not shown, outputs a signal indicating that there is fluid within the pipe P.

Note that here a case has been described wherein PFA (a fluorine plastic with an absolute index of refraction of 1.34) was used as the material for the pipe P, and pure water (with an absolute index of refraction of 1.33) was used as the fluid that flows through the pipe P, and where, when there is no water within the pipe P, the pipe P is filled with air (which has an absolute index of refraction of 1.00). However, there is no limitation to this combination, but rather, essentially, the examples of the present invention can be applied similarly insofar as there is a difference between the indices of refraction of the fluid and of the gas in a comparison of when, within the pipe P, there is a fluid and there is not (that is, when the pipe P is filled with some sort of gas).

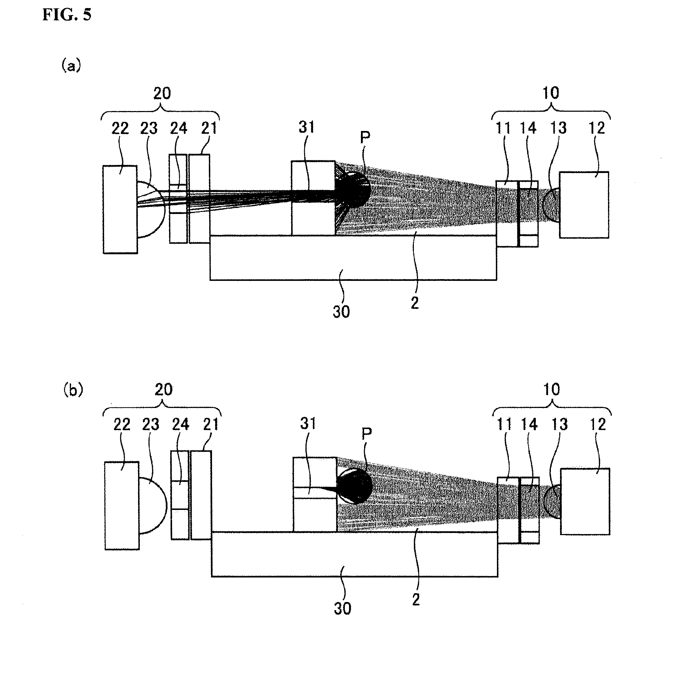

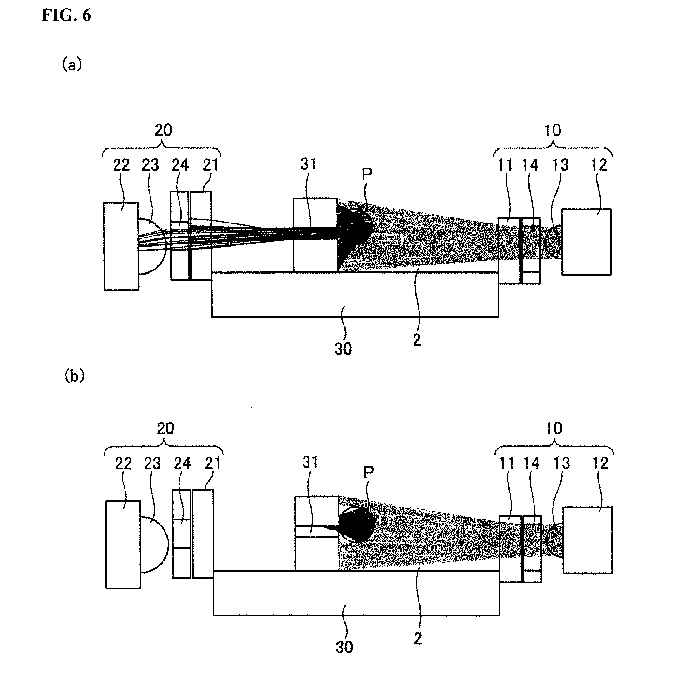

FIG. 5 is a diagram of the emitted light when a pipe P having the same outer diameter of 1.59 mm but with an inner diameter of 0.75 mm is used, where FIG. 5 (a) shows the case wherein there is fluid within the pipe P, and FIG. 5 (b) shows the case wherein there is no fluid. Moreover, FIG. 6 is a diagram of the emitted light when a pipe P having the same outer diameter of 1.59 mm but with an inner diameter of 1.00 mm is used, where FIG. 6 (a) shows the case wherein there is fluid within the pipe P, and FIG. 6 (b) shows the case wherein there is no fluid. In either case, as with FIG. 4, when there is no fluid within the pipe P, the emitted light is refracted by the inner peripheral face of the pipe P, to pass through the slit 31, to arrive at the detecting portion 20. On the other hand, when there is fluid within the pipe P, then the index of refraction at the inner peripheral surface of the pipe P (at the water interface thereof) is different, so that the light cannot pass through the slit 31, and does not arrive at the detecting portion 20. In this way, the provision of the slit 31 between the pipe P and the slit 24 makes it possible to detect whether or not there is a fluid even when there are different inner diameters for the pipe P of the extremely narrow diameter of less than 1/16 inches.

Note, as illustrated in FIG. 4 through FIG. 6, even if there is fluid within the pipe P, still a portion of the diffracted light advances, in a trivial amount, to one end portion of the slit 31, and thus preferably the plate material in which the slit 31 is formed has some degree of thickness. However, when the plate material is thick and the slit 31 is connected to the slit 24, then there is the potential for the production of noise light, such as through multiple reflections of the emitted light on the inner wall faces of the connected slits, and thus the plate material wherein the slit 31 is formed in the plate material wherein the slit 24 is formed are separate and separated from each other.

Note that in the fluid sensor in the illustrated example, the distance from the housing wall face 11 to the housing wall face 21 is 13 mm. Moreover, the width of the opening of the slit 14 in the vertical direction was 2.0 mm, and in the horizontal direction was 1.0 mm, the width of the opening of the slit 24 in the vertical direction was 1.3 mm, and in the horizontal direction was 1.0 mm, and the width of the slit 31 in the vertical direction was 0.5 mm, and in the horizontal direction was 2.0 mm. Of these, preferably the width of the opening of the slit 31 in the vertical direction (0.5 mm) is narrower the smaller the outer diameter (1.59 mm) of the pipe P. Moreover, as in the illustrated example, when the area of the opening of the slit 24 is larger than the area of the opening of the slit 31, then the emitted light that has passed through the slit 31 can enter easily into the detecting element 22 side from the slit 24, thus improving the detection sensitivity by increasing the amount of light received at the detecting element 22. On the other hand, the opening area of the slit 24 may be smaller than the opening area of the slit 31, in which case it is possible to prevent incorrect evaluations due to the decreased likelihood of external noise light getting into the detecting element 22 side from the slit 24.

Moreover, in the fluid sensor in the illustrated case, of the emitted light that is emitted from the light emitting portion 10, the emitted light that is toward the top in the plane of the paper is used to detect whether or not there is a fluid within the pipe P; however, there is no limitation thereto, but rather the structure may be one wherein the various portions of the fluid sensor that is illustrated, aside from the housing 1, may be inverted vertically, so that, of the emitted light from the light-emitting portion 10, the lower portion of the emitted light can be used to detect whether or not there is the fluid within the pipe. In the case of this structure, the axis X of the pipe P would be aligned to a position along the opening edge portion on the bottom side of the slit 31.

Given the above, in an example, the fluid sensor includes a light-emitting portion 10 for emitting emitted light from the light-emitting element 12 from the slit 14 toward the pipe P, a detecting portion 20, for detecting, through a slit 24, by a detecting element 22, the emitted light that was emitted toward the pipe P from the light-emitting element 12, and a slit 31, arranged between the pipe P and the slit 24, for selectively transmitting, in the direction of the slit 24, the emitted light that was emitted from the light-emitting portion 10 toward the pipe P when there is no fluid within the pipe P, where the slit 31 is formed with an opening that is smaller than the radius of the pipe P, where a positioning portion 32 is structured so as to position the pipe P so that the axis X of the pipe P is aligned with the opening edge portion 33. Because of this, actually even in a fluid sensor that was designed for detecting whether or not there is fluid in a large-diameter pipe, the provision of the slit 31 makes it possible to detect whether or not there is a fluid in a pipe P that has a smaller diameter. Moreover, it is still possible to detect whether or not there is a fluid, even in a pipe with an extremely small diameter wherein the inner diameter is different.

Moreover, in the example, the attachment 30 is structured separately from the housing 1. Because of this, the attachment 30 can be attached to or removed from the housing 1, and, for example, the attachment 30 can be changed depending on the outer diameter of the pipe P, making it possible to detect whether or not there is a fluid, using an attachment 30 wherein a slit 31 having a suitable opening width is formed. Moreover, if the outer diameter of the pipe P is secured in the detection region 2 in a state wherein the attachment 30 has been removed, it is possible to detect whether or not there is a fluid in a large-diameter pipe P. Consequently, the structure can be one of a general-use fluid sensor that is able to detect whether or not there is a fluid for pipes of a variety of diameters, ranging from extremely narrow to large.

On the other hand, the slit 31, the positioning portion 32, and the like, need not necessarily be structured as an attachment 30, but rather may be structured integrally with the housing 1. In the case of this structure, there is no need for the holding portion 40, the band 41, and the like, for securing the attachment 30 to the housing 1, thus making it possible to make the fluid sensor smaller.

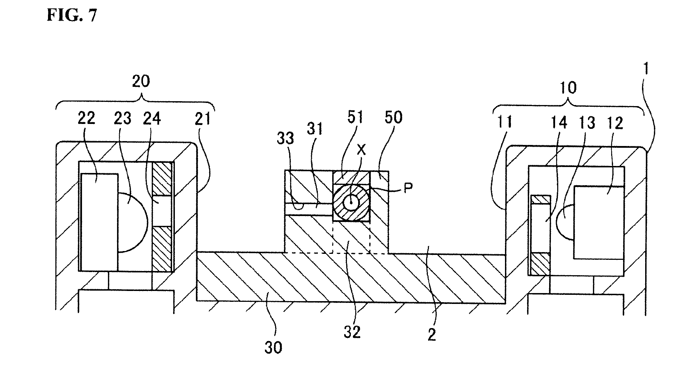

Furthermore, the holding portion 40 is not limited to the example that is illustrated, but rather may be structured so as to be able to secure the attachment 30 and the pipe P to the housing 1. FIG. 7 shows, as an alternate example, a fluid sensor provided with a separate holding portion. In this alternate example, a plate-shape holding portion 50 and a cover 51 are used to secure the pipe P to a specific location of the attachment 30. Specifically, the plate-shape holding portion 50 is formed between the slit 14 and the pipe AP, and pushes the pipe P against the plate member wherein the slit 31 is formed, to hold the pipe P in this state. In addition, the position of the pipe P in the vertical direction is determined by the positioning portion 32, and the pipe P is covered by the cover 51 to be held in the vertical direction. Note that the holding portion 50 is either structured from a transparent material, or has a slit of an adequate opening area formed therein, so as to not block the light emitted from the light-emitting portion 10.

Note that while examples according to the present invention were described in detail referencing the drawings, the specific structure is not limited to the structure set forth above, but rather modifications in the design within a range that does not deviate from the spirit or intent of the present invention are included, of course, within the present invention.

## Claims

1. A fluid sensor comprising:
a light-emitting portion emitting, through a first slit toward a transparent pipe, emitted light from a light-emitting element; and
a light detecting portion detecting, by a detecting element, through a second slit, the emitted light that was emitted toward the pipe from the light-emitting portion; wherein
whether there is a fluid within the pipe is detected based on the amount of light detected in the detecting portion, comprising:
a third slit, arranged between the pipe and the second slit, causing the selective passage of the emitted light, emitted toward the pipe from the light-emitting portion, toward the second slit when there is no fluid within the pipe.

2. The fluid sensor as set forth in Claim 1, wherein:
the third slit is formed with an opening that is smaller than the radius of the pipe, and the axis of the pipe is aligned with an edge portion of the opening.

3. The fluid sensor as set forth in Claim 2, comprising:
a positioning portion positioning the pipe so that the axis of the pipe is aligned with the opening edge portion of the third slit.

4. The fluid sensor as set forth in Claim 1, comprising:
a transparent holding portion, provided between the first slit and the third slit, pushing the pipe against the third slit.

5. The fluid sensor as set forth in Claim 1, comprising:
a housing containing the light-emitting element and the detecting element in a pair of protruding structures having a hollow part interposed therebetween,
wherein the first slit and the second slit are provided in mutually-facing wall faces of the pair of protruding structures having the hollow part interposed therebetween; and
an attachment that is attachable in the hollow part of the housing; wherein:
the third slit is provided in the attachment.
